# FASCICULE DE BREVET EUROPEEN

(11) **EP 2 361 713 B1**
(45) Date de publication et mention de la délivrance du brevet: **03.10.2018**
(21) Numéro de dépôt: 10154809.7
(22) Date de dépôt: 26.02.2010
(51) Int. Cl.: B23H 7/26, B23Q 3/155

(54) **Dispositif de gestion des électrodes pour machines d'usinage par électroérosion**
Vorrichtung zur Verwaltung von Elektroden für Elektroerosionsmaschinen
Device for managing electrodes for spark-machining equipment

(43) Date de publication de la demande: 31.08.2011
(73) Titulaire: Agie Charmilles SA, 6616 Losone (CH)
(72) Inventeur: Bobeck, Magnus, 598 94 Vimmerby (SE); Bruyère, Olivier, 74370 Naves Parmelan (FR); Chapatte, Christian, 1213 Petit-Lancy (CH); Thing, Jens, 2563 Ipsach (CH)
(74) Mandataire: Fenner, Seraina

(56) Documents cités:
- EP-A1- 0 132 599
- EP-A1- 0 255 042
- EP-A1- 0 311 857
- GB-A- 2 329 139

## Description

La présente invention concerne un dispositif de gestion des électrodes pour machines d'usinage par électroérosion (EDM). Un tel dispositif est connu du document EP0132599. Ce document montre la combinaison des éléments mentionnés dans le préambule de la revendication 1.

Ces machines utilisent des électrodes outils destinées à usiner des électrodes pièces. Le dispositif comporte au moins un magasin ou râtelier présentant une série de logements individuels agencés pour recevoir et maintenir des éléments à échanger constitués par lesdites électrodes montées chacune sur un porte-électrode. Le dispositif comporte au moins un changeur muni d'au moins un organe de préhension destiné à déplacer les éléments à échanger entre lesdits logements individuels et un système d'attachement situé sur la machine et vice versa.

Les dispositifs répandus en EDM sont en général équipé d'un magasin linéaire (râtelier) ou en forme de carrousel dans lequel les éléments à échanger sont verrouillés dans les logements individuels ; un bras manipulateur transporte les éléments à échanger entre le magasin et un système d'attachement constitué en général d'un mandrin lié soit à la tête soit à la table de la machine EDM ; une commande numérique contrôle les déplacements, les arrêts en positions de référence et synchronise les verrouillages/déverrouillages sur le bras, la tête ou la table. Plusieurs mouvements sont possibles, selon une séquence particulière, par exemple :
le bras se déplace vers une position précise située sous le magasin de manière que l'élément à échanger soit déverrouillé de son serrage dans le magasin et verrouillé sur le bras,
le bras se déplace vers une position de référence en regard de la tête afin que l'élément à échanger soit déverrouillé et verrouillé sur le bras,
la tête d'usinage effectue un mouvement de sorte à libérer l'élément à échanger verrouillé sur le bras,
le bras effectue un mouvement de sorte à libérer l'élément à échanger verrouillé sur la tête, etc.,
dans certains dispositifs relativement lents, c'est la tête d'usinage qui effectue les mouvements nécessaires au transfert des éléments à échanger,
dans d'autres dispositifs plus rapides un bras pivotant manipule en même temps deux éléments à échanger, l'un qui vient dans la tête, l'autre qui retourne dans le magasin.

Les dispositifs pour le changement d'éléments utilisés couramment avec les machines d'électroérosion par enfonçage sont des automates relativement lents, mais ils sont compatibles avec l'EDM qui a certes acquis auprès du public l'image d'un procédé lent. Le besoin d'accélérer les cadences des changements est apparu tardivement car dans la plupart des cas la rentabilité globale du processus d'usinage ne s'en est pas trouvé notablement affectée. Dés qu'une réserve de plus de dix éléments à échanger est nécessaire, les magasins et changeurs disponibles pour l'électroérosion deviennent très encombrants et peuvent occuper la place au sol d'une seconde machine. Cela vient du fait qu'ils ont été construits pour correspondre aux dispositifs d'attachement standard des portes-électrodes utilisés couramment en EDM ; dispositifs conventionnels qui sont maintenant très répandus chez les utilisateurs ; ces dispositifs d'attachement imposent de saisir, stocker et verrouiller les éléments à échanger en position verticale. Dans le cas d'un magasin circulaire cette contrainte impose un axe de rotation vertical et un diamètre important, d'où un encombrement maximal. Un magasin circulaire avec un axe horizontal permettrait au contraire de stocker un grand nombre d'éléments à échanger avec un minimum d'encombrement au sol.

Les dispositifs d'attachement en question ont été développés particulièrement pour l'électroérosion de sorte à garantir un repositionnement précis des éléments à échanger notamment dans la tête d'usinage de la machine d'électroérosion. L'usinage par électroérosion est connu pour son ambiance de travail fortement polluée par les fumées et les particules issues du cracking des diélectriques, particules qui sont susceptibles de coller aux interfaces mécaniques compromettant la précision des repositionnements. Raison pour laquelle notamment on a du abandonner les dispositifs munis de cônes en raison des trop grandes surfaces d'appui devant entrer en contact. Ces dispositifs d'attachement particuliers sont décrits entre autres dans les documents de brevets suivants : EP 0 255 042, EP 0 285 557, EP 0 997 220, WO 99 33 601, US 5,634,757.

Ils comportent en général chez tous les constructeurs une tige de traction étroite attachée axialement au porte-électrode ; le dispositif de liaison entre la tige et le porte-électrode est conçu de préférence pour permettre un désalignement entre les axes de la tige et du porte-électrode de sorte que la tige ne transmette aucun couple vers le porte-électrode. On obtient un tel résultat par exemple au moyen d'une genouillère.

Proche de l'extrémité de cette tige de traction, un élément de retenue sous forme d'une gorge circulaire coopère avec un système de verrouillage constitué de billes et ressorts situés dans la tête ou la table de la machine. Ces dispositifs d'attachement comportent deux fois quatre faces d'appui rectifiées en vis-à-vis, présentes d'une part sur la tête ou la table, d'autre part sur le porte-électrode et qui réalisent un plan de contact perpendiculaire à l'axe du système d'attachement à la tête ou à la table. Les faces d'appui situées sur la tête ou sur la table sont munies chacune d'un orifice pneumatique en leur centre. Un puissant jet d'air comprimé chasse les impuretés au moment où les faces d'appui situées en vis-à-vis viennent s'appuyer l'une contre l'autre. De plus, ces faces d'appui sont de surface restreinte de sorte que la pression de contact soit suffisante pour écraser toute impureté qui y resterait collée. Selon les constructeurs on trouve un groupe de quatre faces d'appui sur des bossages proéminents attachées soit au porte-électrode, soit à la tête d'usinage par exemple.

La tige de traction doit être suffisamment étroite pour pouvoir se loger entre les quatre faces d'appui et en outre permettre l'introduction d'une fourche du changeur de part et d'autre de cette même tige sans toucher les bossages.

Ces dispositifs d'attachement comportent encore des pièces élastiques généralement sous forme de plaques qui ont la particularité d'être déformables dans la direction de l'axe de la tête d'usinage, mais qui offrent une grande rigidité dans la direction perpendiculaire au même axe. Des éléments d'alignement généralement sous forme picots de forme pyramidale en matière très dure et attachés à la tête d'usinage, viennent s'encastrer dans ces pièces élastiques et forcent le porte-électrode à se positionner latéralement par rapport à la tête d'usinage 4 de la machine d'une manière précise et répétitive. La tige de traction ne transmettant au porte-électrode qu'une force axiale, les positionnements des faces d'appui et des picots ne sont pas perturbés par des contraintes parasites. La tige de traction étroite comporte en outre dans sa partie médiane deux gorges superposées correspondant à deux type de fourches : fourche du changeur et fourches du magasin. La tige de traction étroite permet donc, d'une part de verrouiller le porte-électrode dans l'alésage du système d'attachement lié à la tête de la machine ou à la table et d'autre part de le saisir et de le manipuler au moyen d'une simple fourche.

Quelques fournisseurs renommés comme par exemple EROWA, SYSTEM 3R ou HIRSCHMANN proposent des accessoires à incorporer dans la tête ou sur la table de la machine ainsi que des gammes de portes-électrodes dédiés à l'électroérosion. Les principes d'attachement, de préhension, de repositionnement et de verrouillage mis en oeuvre sont similaires d'un fournisseur à l'autre ; cependant des détails de construction différencient chaque fournisseur. De ce fait les utilisateurs choisissent en général une marque unique et équipent leur parc de machines EDM de matériels issus d'un seul fournisseur de système d'attachement et ceci même s'ils possèdent des machines d'électroérosion de marques différentes. Par suite une même machine équipée d'un système d'attachement d'une marque donnée ne peut plus accepter les portes-électrodes d'une autre marque.

Si de tels portes-électrodes sont chargés de manière symétrique, maintenus verticaux, suspendus par leur tige de traction et qu'on les manipule à une vitesse suffisamment lente, alors ce système de fourches est acceptable pour le maintient desdits portes-électrodes à leur place durant leur transport et leur stockage.

Les utilisateurs de machines d'électroérosion d'enfonçage sont fréquemment amenés à confectionner un grand nombre d'électrodes de formes différentes pour usiner une seule pièce ou un seul moule. Ces électrodes doivent être maintenues à disposition dans le râtelier ou magasin durant toute la durée de l'usinage car elles peuvent être utilisées plusieurs fois chacune pour réaliser des empreintes répétitives en plusieurs endroits de la pièce à usiner. De ce fait chaque empreinte isolée ne nécessitant que quelques minutes d'usinage, le temps passé à changer d'électrode tend à devenir significatif et l'utilisateur ne se sent pas libre de choisir la séquence d'usinage optimale, c'est-à-dire l'ordre qui lui convient le mieux pour utiliser et réutiliser les diverses électrodes à disposition dans le magasin. D'autre part lors de la préparation de ces séquences d'usinage complexes comportant un grand nombre d'électrodes, l'opérateur souhaite effectuer des opérations de préréglage des électrodes ou des simulations à vide avant de lancer l'usinage proprement dit, de sorte par exemple à éliminer tout risque de mauvais positionnement d'une électrode sur son porte-électrode ou d'interversion d'éléments à échanger dans le magasin. Toute la séquence d'échange est alors déroulée sous les yeux de l'opérateur qui effectue des mesures géométriques dans la zone de travail et contrôle son programme d'exécution. Chaque électrode est amenée en position en face de la cavité qu'elle est destinée à usiner ou au contact d'un capteur de mesure, mais l'usinage n'est pas enclenché durant ces opérations. L'opérateur souhaite évidemment que la phase de simulation et de préréglages se déroule le plus vite possible.

Pour ces raisons le besoin est apparu ces dernières années dans le domaine de l'électroérosion de disposer d'automates, ou dispositifs de gestion, plus rapides pour changer les portes-électrodes. C'est pourquoi il a d'abord été envisagé d'accélérer les mouvements des automates à disposition. Malheureusement de nombreux incidents tels que chutes d'éléments à échanger, mauvaises préhensions dans le système d'attachement sur la machine, coincements, collisions, ont été enregistrés. Ces incidents sont provoqués par le fait que les fourches des changeurs saisissent les éléments à échanger par l'intermédiaire de la tige de traction très étroite décrite ci-dessus ; un tel attachement procure malheureusement une rigidité insuffisante dans ces nouvelles conditions en raison du jeu et du faible diamètre de la gorge de préhension autour de ladite tige de traction. Durant le mouvement rotatif rapide du changeur, le porte-électrode lesté d'une électrode quelquefois lourde et déséquilibrée, est soumis à des oscillations dangereuses nuisibles à la fiabilité de l'installation.

Malgré ces contraintes, il serait souhaitable qu'un nouveau concept pour la gestion des électrodes donne la possibilité à l'utilisateur de réutiliser son stock existant de portes-électrodes quelle qu'en soit la marque ; c'est-à-dire sans avoir à le renouveler ni même le modifier car cela entraînerait pour lui des frais rédhibitoires ; en effet, certains utilisateurs disposent d'un stock considérable de portes-électrodes sur lesquels certaines électrodes sont fixées et ajustées à demeure dans le but d'effectuer plusieurs opérations d'usinage sur plusieurs machines différentes et sur une longue période, c'est-à-dire plusieurs semaines ou mois. Il serait également souhaitable qu'un tel dispositif de gestion des électrodes soit capable de manipuler plusieurs voire toutes les marques de portes-électrodes dédiés à l'électroérosion disponibles sur le marché.

Le but de la présente invention est de réaliser les souhaits, ainsi que d'éviter les inconvénients indiqués ci-dessus. Ceci est obtenu par un dispositif tel que revendiqué dans la revendication 1.

Par suite, il devient possible de manipuler et de stocker des portes-électrodes dédiés à l'électroérosion et provenant de n'importe quel fournisseur. Une telle solution comporte de nombreux avantages. Il n'est pas nécessaire de remettre en cause le concept de préhension des portes-électrodes selon les standards largement répandus dans le domaine de l'électroérosion. Notamment il est possible de conserver le système simple et éprouvé construit autour d'une tige de traction étroite attachée axialement au porte-électrode et qui permet d'une part de verrouiller l'élément à échanger dans l'alésage du système d'attachement et d'autre part de le stocker d'une manière fiable dans le magasin. Par suite le parc d'équipements des utilisateurs n'est pas affecté. L'utilisateur n'est pas obligé de démonter une électrode déjà installée et réglée sur son porte-électrode. Cela permet aussi d'améliorer l'image du procédé EDM et de lui donner une connotation plus dynamique dans un environnement de machines et d'automates devenant de plus en plus rapides. La machine équipée d'un semblable dispositif de gestion des électrodes acquiert une meilleure rentabilité sans provoquer d'inconvénient aux autres machines de l'atelier qui utilisent le même parc de portes-électrodes.

Avantageusement, cette première pièce d'adaptation présente un encombrement latéral au moins aussi grand que celui du porte-électrode. Une telle conformation permet de contrecarrer les balancements intempestifs de l'élément à échanger lors de sa manipulation par la pince. Les risques de chutes sont écartés. La tige de traction ne risque pas d'être engagée de travers dans le système d'attachement sur la machine, éliminant ainsi les risques de coincement et assurant une excellente précision de repositionnement de l'élément à échanger sur la machine.

La première pièce d'adaptation est conformée de façon à s'imbriquer sur le porte-électrode, des moyens de fixation étant prévus pour l'assujettir au porte-électrode d'une manière particulière, procurant un mode d'exécution très favorable et caractérisé en ce que la première pièce d'adaptation est fixée d'une manière rigide à la tige de traction tout en présentant un jeu par rapport à toutes les parties du porte-électrode. Une telle conformation permet un désalignement entre les axes de la tige et du porte-électrode. Un tel désalignement est communément réalisé sous forme d'une genouillère. De cette façon, un éventuel désalignement de la pince par rapport à l'axe du système d'attachement de la machine ne provoquera aucun effort parasite lors de l'introduction de la tige de traction.

De façon avantageuse la première pièce d'adaptation comporte une série d'alésage et d'orifices permettant à la tige de traction ainsi qu'aux bossages et picots de la traverser complètement ; cette première pièce d'adaptation présentant au voisinage desdits alésages et orifices une épaisseur qui n'excède pas la hauteur desdits bossages et picots. En outre, elle est munie en son centre d'un alésage central agencé de façon à recevoir la tige de traction et l'axe central de cet alésage correspond à l'axe de symétrie global de cette première pièce d'adaptation. Cette dernière comporte favorablement au moins une rainure ou nervure périphérique agencée de façon à coopérer avec une nervure ou rainure prévue sur la pince pour bloquer tout mouvement de l'élément à échanger par rapport à la pince durant sa manipulation. Avantageusement elle comporte également sur sa face inférieure un évidement destiné à recevoir le porte-électrode qui vient se loger dans ledit évidement. A la périphérie de cette première pièce d'adaptation, au moins une encoche est prévue pour assurer l'indexation angulaire de l'élément à échanger par rapport à la pince et/ou par rapport aux logements individuels du magasin.

Dans un mode d'exécution particulièrement favorable, la tige de traction est incorporée à la première pièce d'adaptation constituant une pièce monobloc.

Dans un autre mode d'exécution complémentaire très favorable, le dispositif de gestion comporte une seconde pièce d'adaptation associée et fixée à chacun des logements individuels du magasin susceptibles d'être utilisés ; cette seconde pièce d'adaptation comporte en son centre un alésage axial agencé de façon à recevoir la tige de traction du porte-électrode ; chaque logement individuel est solidaire d'un bras articulé à son extrémité libre au magasin de façon à permettre le basculement du logement individuel et de l'élément à échanger d'une position horizontale vers une position verticale et inversement pour assurer un stockage horizontal des éléments à échanger et leur prise par la pince dans une position verticale.

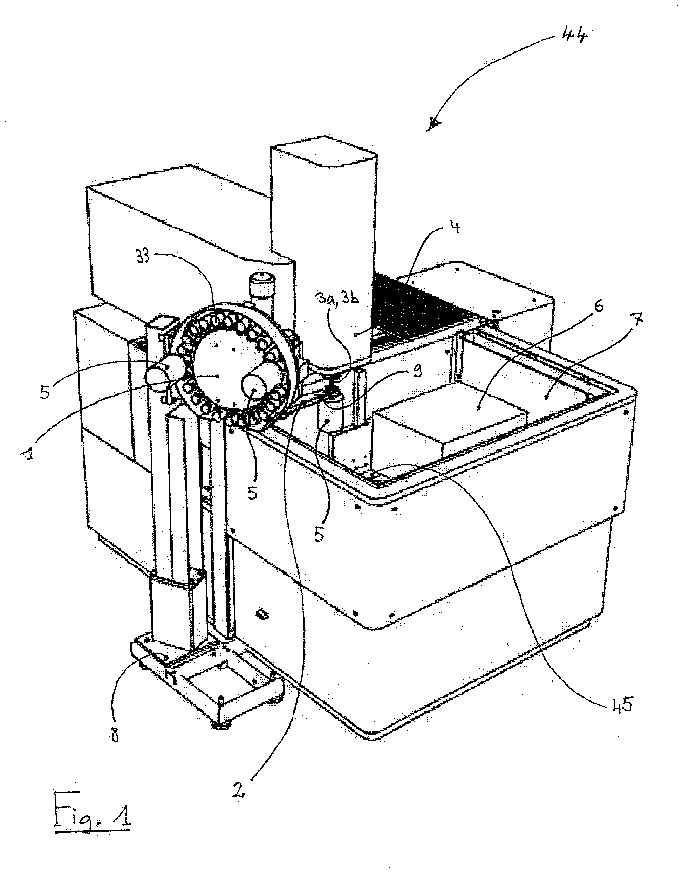

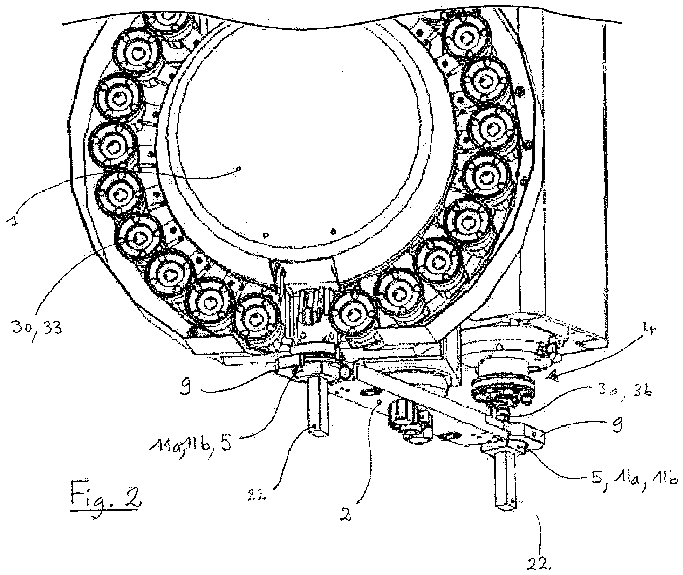

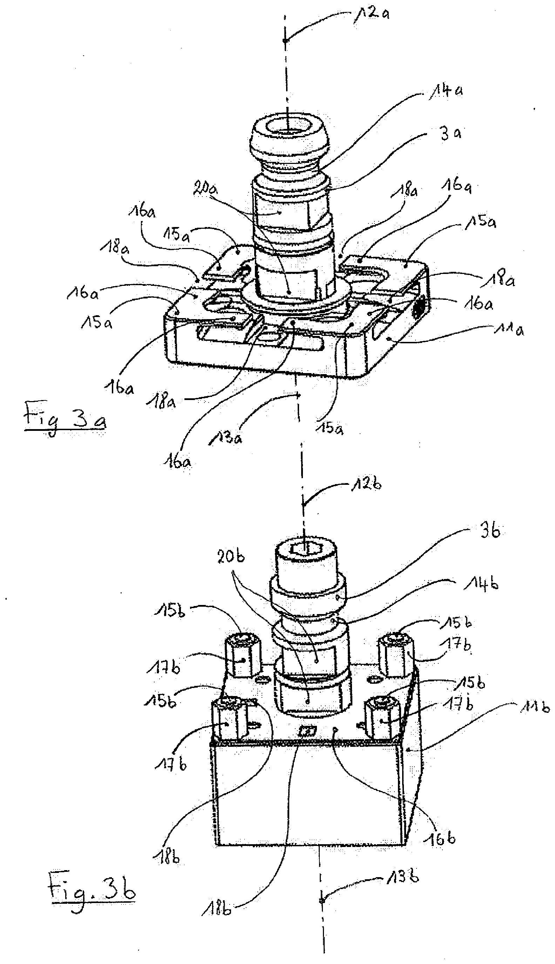

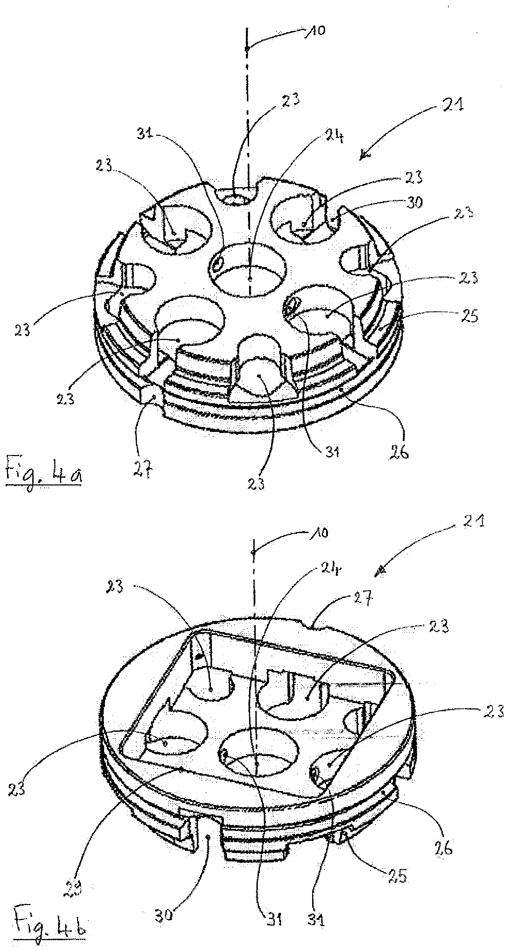

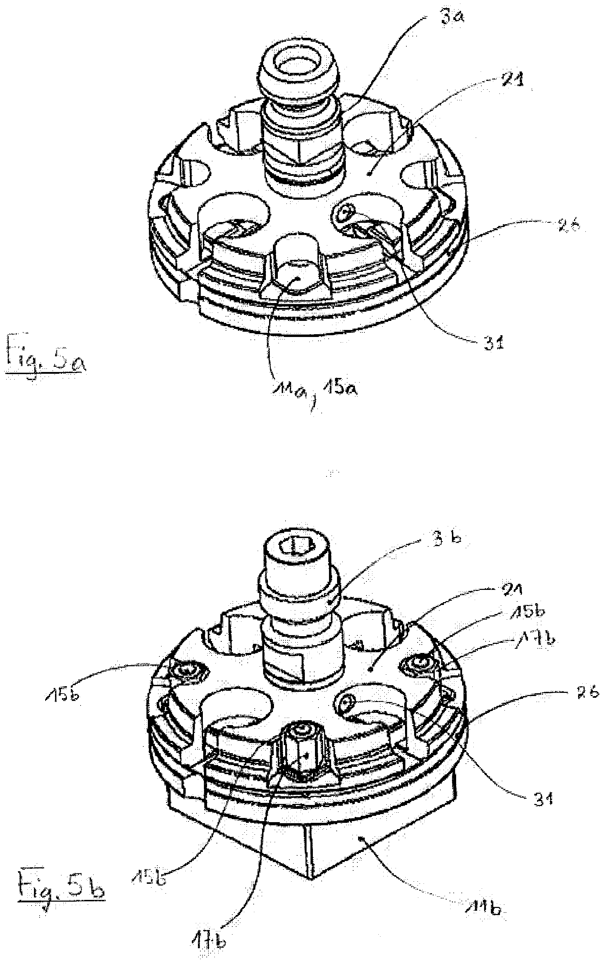

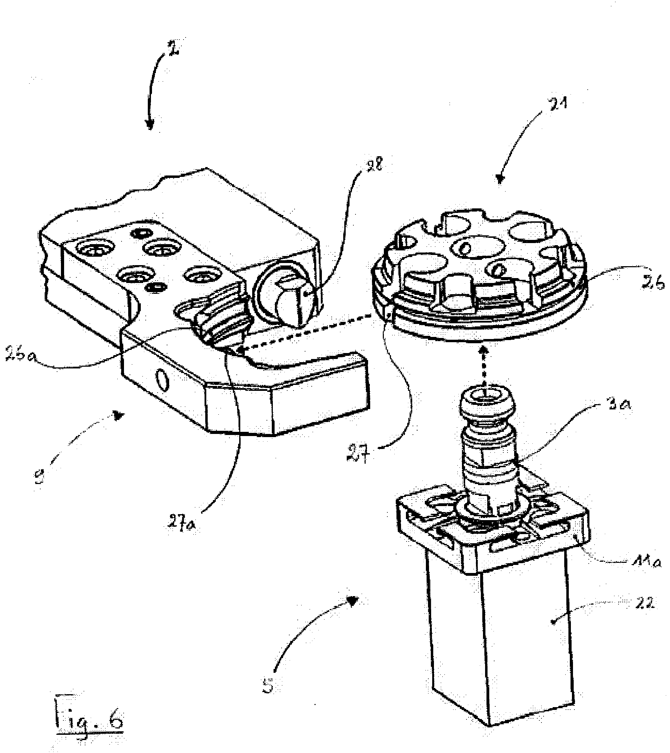

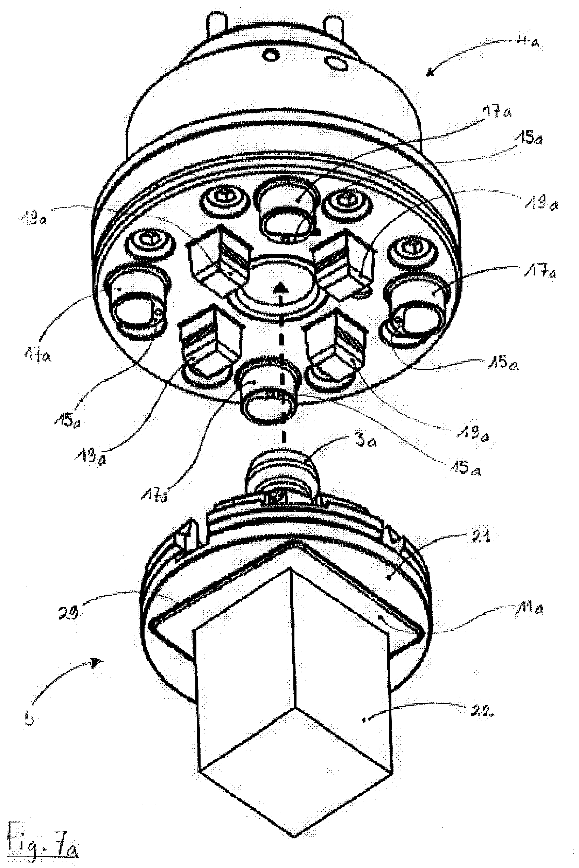

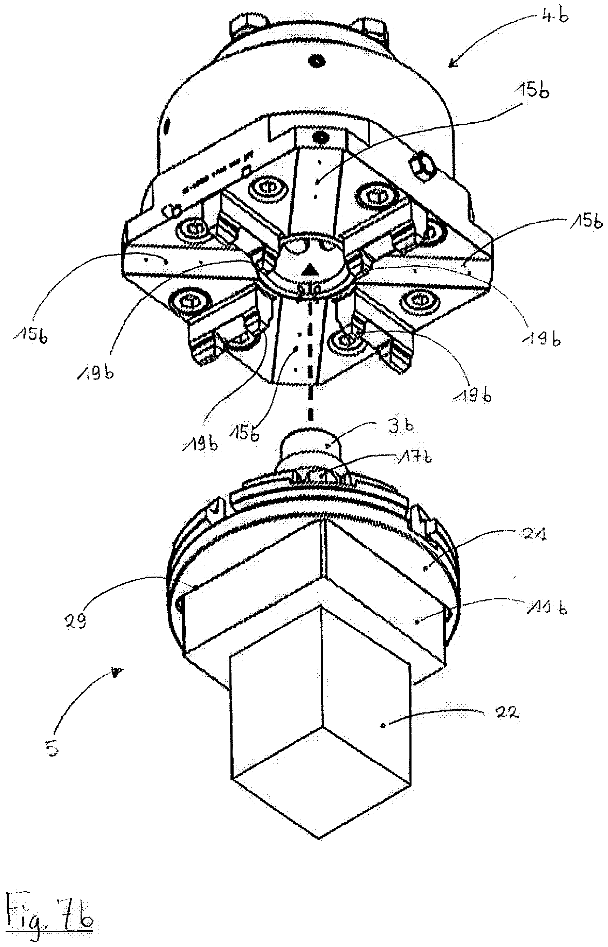

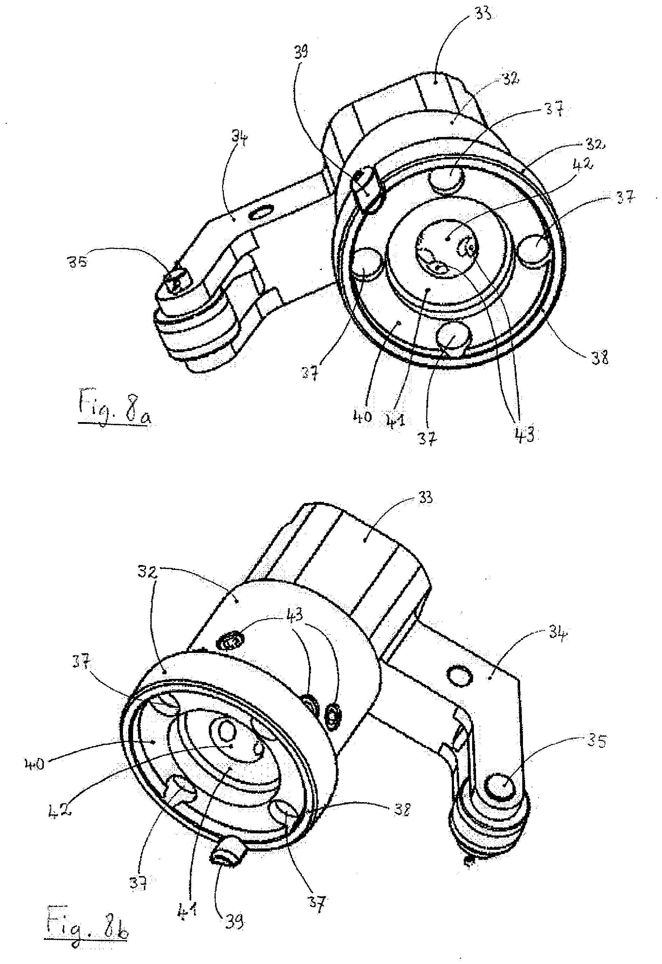

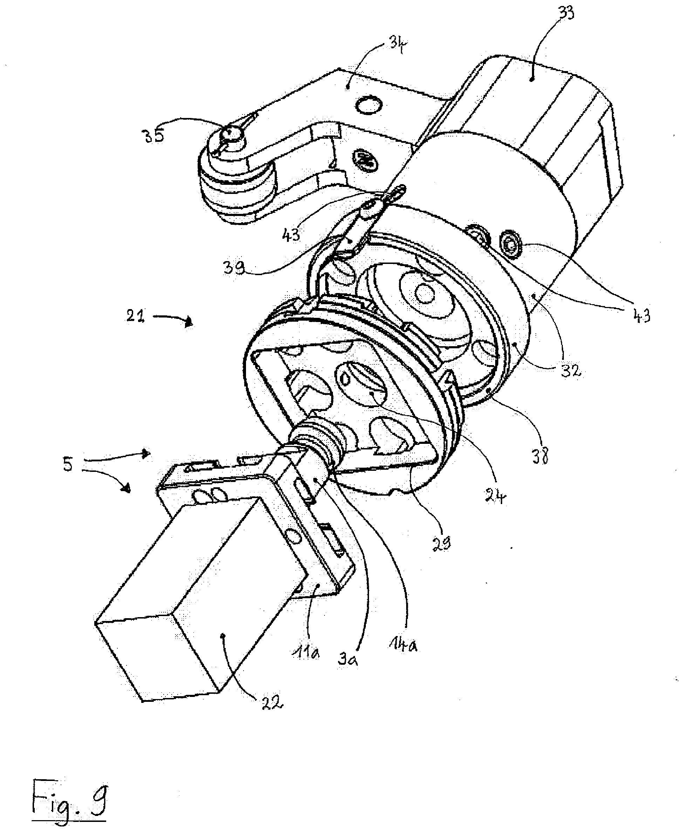

D'autres caractéristiques avantageuses figurent dans les revendications dépendantes et dans la description détaillée ci-après qui s'appuie sur une série de figures représentant schématiquement et à titre d'exemple les modes d'exécution de l'invention.
**La** **figure 1** représente une machine d'électroérosion (EDM) équipée d'un dispositif de gestion des électrodes selon l'invention.
**La** **figure 2** représente plus en détails le dispositif de gestion des électrodes avec le magasin, le changeur qui manipule deux éléments à échanger et la tête d'usinage de la machine.
**Les** **figures 3a et 3b** illustrent deux types de portes-électrodes standard EDM selon deux fournisseurs différents.
**Les** **figures 4a et 4b** représentent la première pièce d'adaptation selon l'invention ; respectivement une vue de sa face supérieure et de sa face inférieure.
**Les** **figures 5a et 5b** représentent la même première pièce d'adaptation montée sur les deux types de portes-électrodes standard EDM tels qu'on peut les voir sur les figures 3a et 3b.
**La** **figure 6** est une représentation éclatée de trois objets devant coopérer : la pince du changeur, la première pièce d'adaptation et un élément à échanger.
**La** **figure 7a** est une représentation éclatée de deux objets devant coopérer : le mandrin lié à la tête d'usinage et un élément à échanger muni de sa première pièce d'adaptation. Dans cet exemple, la machine est équipée de portes-électrodes identiques à celui de la figure 3a.
**La** **figure 7b** est similaire à la précédente sauf que la machine est équipée de portes-électrodes identiques à celui de la figure 3b.
**Les** **figures 8a et 8b** sont deux vues différentes de la seconde pièce d'adaptation selon l'invention, montée sur un logement du magasin.
**La** **figure 9** est une représentation éclatée de trois objets devant coopérer : un élément à échanger, la première pièce d'adaptation qui lui est associée, mais qui est représentée disjointe, et un logement du magasin sur lequel est montée la seconde pièce d'adaptation.

Les figures 1 et 2 illustrent l'environnement de travail de la machine EDM 44 avec le magasin 1 et le changeur d'éléments 2 qui équipent la machine. Le bras du changeur 2 réalise deux mouvements rapides. Un premier mouvement vertical est destiné d'une part à verrouiller/déverrouiller la tige de traction 3a, 3b de son encastrement du côté magasin, d'autre part à introduire/retirer cette même tige de traction du mandrin lié à la tête d'usinage 4 de la machine ; ledit mandrin constituant un système d'attachement tel que mentionné ci-dessus. Un second mouvement rotatif de 180° permet d'intervertir les positions de l'élément à échanger 5 qui sort de la tête d'usinage 4 avec la position de celui qui sort du magasin 1. Une électrode pièce 6 est attachée à la table de travail 45 de la machine EDM 44. Le magasin 1 repose au sol sur un socle 8 dont l'encombrement est relativement réduit en comparaison de celui de la machine 44 elle-même. Ce gain de place est principalement dû au fait que le magasin circulaire 1 tourne autour d'un axe horizontal. En raison de cette particularité, l'élément à échanger 5 sortant du magasin 1, pour être saisi par la pince 9 du changeur, doit être basculé de la position horizontale vers la position verticale. Comme illustré sur la figure 2, le basculement s'effectue au niveau du logement 33 du magasin 1 situé le plus bas. De même l'élément à échanger 5 apporté par la pince 9 du changeur 2 et entrant dans le magasin 1 doit être basculé de la position verticale vers la position horizontale. Ce mouvement de rotation d'un quart de tour de l'élément à échanger 5 est assuré par une fonction mécanique conventionnelle du magasin 1. Par conséquent les éléments à échanger 5 dans ce type d'exécution ne sont pas stockés suspendus par leur tige de traction 3a, 3b, comme cela est réalisé dans les magasins ou râteliers standard EDM. Le changeur 2 effectue une translation verticale de faible amplitude et une rotation de 180°. Par ces mouvements optimisés, il est possible en une temps très court d'ôter un élément à échanger 5 verrouillé dans le mandrin de la tête d'usinage 4, le remplacer par un nouvel élément et ramener l'ancien dans le magasin 1. La commande numérique de la machine EDM 44 ne s'occupe que de positionner la tête d'usinage 4 au point de changement d'outil. Les mouvements du changeur sont réglés par des cames et des capteurs de fin de course selon des techniques connues des gens du métier ce qui permet de réaliser un dispositif fiable et peu coûteux.

Les figures 3a et 3b permettent de rappeler quelques particularités de deux types de portes-électrodes standard EDM proposés par deux fournisseurs renommés : *SYSTEM 3R* et *EROWA.* La tige de traction étroite 3a, 3b, est attachée axialement au porte-électrode 11a, 11b. Pour simplifier les figures, le dispositif de liaison entre la tige et le porte-électrode permettant un désalignement entre les axes 12a, 12b de la tige et 13a, 13b du porte-électrode, n'est pas illustré car bien connu des praticiens. Proche de l'extrémité de la tige de traction 3a, 3b se trouve une gorge circulaire 14a, 14b destinée à coopérer avec le système de verrouillage situés dans le mandrin de la tête d'usinage 4. Sur les portes-électrodes 11a, 11b le plan de contact de référence est réalisé par quatre faces d'appui rectifiées 15a, 15b. Dans le cas de la figure 3b, les quatre faces d'appui 15b sont situées sur des bossages proéminents 17b attachées au porte-électrode 11b. Des plaques 16a, 16b, élastiques dans une direction, mais offrant une grande rigidité dans la direction perpendiculaire, sont attachées au porte-électrode 11a, 11b. Des picots de forme pyramidale 19a, 19b en matière très dure situés sur la tête d'usinage 4a,4b, visibles sur les figures 7a, 7b, viennent se placer dans des encastrements 18a, 18b prévus dans les plaques élastiques 16a, 16b. La tige de traction étroite 3a, 3b comporte dans sa partie médiane deux gorges superposées 20a, 20b correspondant aux deux type de fourches déjà mentionnées: fourche du changeur et fourches du magasin (non représentées sur les figures).

Une première pièce d'adaptation 21 (figures 4a et 4b) a été conçue pour permettre à la pince 9 du changeur 2 (figure 6) de saisir un élément à échanger 5 dédié à l'électroérosion ; ce dernier comportant un porte-électrode 11a et une électrode 22 . Une telle pince de changeur 9 est conçue pour enserrer un objet ayant de préférence une forme cylindrique et réaliser une préhension ferme. L'objet saisi le sera d'une manière d'autant plus rigide et fiable que la pince sera plus large. Il est donc préférable de saisir l'objet à manipuler 5 autour d'un diamètre qui englobe son encombrement; le diamètre intérieur de la pince du changeur 9 est choisi assez grand pour convenir à l'encombrement de tous les portes-électrodes 11a, 11b devant être manipulés. Par suite, selon l'invention, la première pièce d'adaptation 21, destinée à servir d'interface entre la pince du changeur 9 et les éléments à échanger 5 réalise un encombrement latéral au moins aussi grand que celui du porte-électrode standard EDM 11a, 11b. Elle a globalement la forme d'un cylindre aplati et comporte une série d'orifices 23 et un alésage central 24 permettant aux éléments saillants 17a, 17b, 19a, 19b, 3a, 3b attachés soit à la tête d'usinage, soit au porte-électrode de traverser la pièce d'adaptation 21, ce qui permet d'introduire cette dernière dans la partie supérieure du porte-électrode 11a, 11b comme on peut le voir sur les figures 5a et 5b. L'alésage 24 au centre de la 1^{ère} pièce d'adaptation 21 est prévu pour fixer la tige de traction 3a, 3b. Cette dernière est un organe de verrouillage et de transport mais ne participe pas directement au positionnement du porte-électrode comme exposé ci-dessus. L'axe de symétrie 10 de l'alésage central 24 correspond à l'axe de symétrie global de ladite pièce d'adaptation 21. Parmi les orifices 23 déjà cités, quatre sont pratiqués à la périphérie de l'alésage central 24 pour laisser passer librement les bossages 17a, 17b supportant les faces d'appui. Quatre autres orifices sont situés sur un diamètre intermédiaire, entre la tige de traction 3a, 3b et les faces d'appui , pour laisser passer librement les quatre picots 19a, 19b de forme pyramidale attachés à la tête d'usinage 4a, 4b. Un large chanfrein circulaire 25 pratiqué à sa partie supérieure permet avantageusement d'encastrer cette 1^{ère} pièce d'adaptation 21 dans un logement du magasin et donc d'assurer la fixation de l'élément à échanger 5 durant son stockage. Une rainure circulaire 26 est creusée à la périphérie, rainure dans laquelle une nervure 26a demi circulaire correspondante de la pince du changeur 9 vient se loger. Une 1^{ère} encoche 27 destinée à coopérer avec un ergot 27a de la pince 9 réalise l'indexation angulaire lors de la manipulation par le bras du changeur 2. Pour bloquer tout mouvement de l'élément à échanger 5 durant sa manipulation, un doigt de verrouillage 28 (figure 6) sur la pince 9 vient buter contre la pièce d'adaptation 21. Cette dernière comporte encore sur sa partie inférieure un évidement 29 (figures 4b, 7a, 7b) de forme carrée destiné à recevoir le porte-électrode 11a, 11b qui vient s'encastrer dans ledit évidement. Les figures 5a et 5b montrent la première pièce d'adaptation 21 montée sur la partie supérieure de deux portes-électrode issus de deux fournisseurs différents 11a, 11b. Les électrodes n'ont pas été dessinées sur ces deux figures. On peut voir que grâce à cette pièce d'adaptation 21, la préhension par la pince du changeur 9 peut s'effectuer, dans la rainure circulaire 26, autour d'un diamètre qui englobe l'encombrement complet du porte-électrode 11a, 11b. Ce dispositif de préhension, dans cet exemple, est donc constitué de la rainure 26 dans laquelle vient s'insérer la nervure 26a de la pince 9, l'encoche 27 dans laquelle vient s'insérer l'ergot 27a et le doigt de verrouillage 28 de la pince 9. Il constitue un système particulièrement stable qui permet de maintenir fermement dans la pince 9 l'élément à échanger 5 muni de sa pièce d'adaptation 21 durant les mouvements de rotation rapides du changeur 2. Il est à noter que l'indexation angulaire de la pièce d'adaptation 21 dans le magasin 1 est réalisée par une 2^{nde} encoche 30 diamétralement opposée à la 1^{ère} encoche 27 pour l'indexation angulaire dans la pince 9.

Au voisinage des orifices 23 traversés par les bossages 17a, 17b l'épaisseur de cette première pièce d'adaptation 21 ne doit pas excéder la hauteur desdits bossages, mais pourra s'étendre selon les besoins dans la direction de l'électrode 22. La figure 7a montre un porte-électrode 11a d'une certaine marque, muni de sa pièce d'adaptation 21 et de son électrode 22, en face d'un mandrin de la même marque monté dans la tête d'usinage 4a de la machine EDM. La figure 7b similaire illustre un cas où la machine est équipée d'une autre marque de matériels standard EDM.

Pour que le porte-électrode 11a, 11b soit à nouveau manipulable sans limitation par un changeur et un magasin EDM ne bénéficiant pas de l'invention, il suffit d'ôter cette 1^{ère} pièce d'adaptation 21 qui se démonte et se remonte très simplement à l'aide d'au moins une petite vis de blocage 31 ou d'un clip en prise avec la tige de traction 3a, 3b. Par ce moyen, la 1^{ère} pièce d'adaptation 21 est assujettie rigidement à la tige de traction 3a, 3b, mais présente un jeu par rapport à toutes les parties du porte-électrode 11a, 11b de sorte à ne pas empêcher un désalignement entre l'axe 12a, 12b de la tige 3a, 3b et l'axe du porte-électrode 13a, 13b tel que décrit ci-dessus.

Cette première pièce d'adaptation 21 accompagne chaque porte-électrode 11a, 11b ou élément à échanger 5 présent dans le magasin 1. Les électrodes 22 sont ajustées avec une grande précision sur le porte-électrode standard EDM 11a, 11b. La pièce d'adaptation 21 ne perturbe pas cet ajustage et fonctionne d'une manière similaire à la tige de traction 3a, 3b qui elle aussi, dans certaines exécutions, peut être montée/démontée facilement. Selon une variante de l'invention, il est envisageable de concevoir une telle pièce d'adaptation dans une exécution monobloc en lui incorporant une tige de traction.

Cette première pièce d'adaptation 21 peut être conçue pour ne s'adapter qu'à une seule marque de porte-électrode dédié à l'EDM, mais on peut aussi envisager des pièces d'adaptation acceptant des portes-électrodes de plusieurs marques différentes.

Les portes-électrodes 11a, 11b ou éléments à échanger 5, dans ce type d'exécution n'étant pas stockés suspendus par leur tige de traction 3a, 3b comme déjà mentionné ci-dessus, il est nécessaire de concevoir une seconde pièce d'adaptation 32 pour pouvoir les stocker horizontalement comme représenté sur les figure 1 et 2. Cette seconde pièce d'adaptation 32 réalise l'interface entre le porte-électrode 11a, 11b muni de la première pièce d'adaptation 21 et le logement 33 du magasin 1.

Dans un mode d'exécution moins favorable où le magasin stocke les éléments à échanger en position verticale, il est évidemment possible d'utiliser à nouveau la tige de traction 3a, 3b comme organe de suspension ; auquel cas ladite seconde pièce d'adaptation 32 n'est pas nécessaire.

Comme le montrent les figures 8a, 8b et 9, chaque logement 33 du magasin 1 est muni d'un bras 34 à l'extrémité duquel un axe 35, perpendiculaire à l'axe de symétrie du logement 33, permet le basculement de l'élément à échanger 5 de la position horizontale vers la position verticale et inversement. Dans le but de stocker et de verrouiller des portes-électrodes standard EDM 11a, 11b en position horizontale, il est nécessaire de concevoir ladite seconde pièce d'adaptation 32 comme décrit ci-après.

Cette seconde pièce d'adaptation 32 est associée à chaque logement individuel 33 du magasin 1 devant recevoir un élément à échanger 5, auquel elle est fixée d'une manière conventionnelle par exemple au moyen d'une tige filetée. Dans un autre mode d'exécution la seconde pièce d'adaptation 32 et le logement du magasin 33 constituent une pièce monobloc. D'une manière avantageuse, la seconde pièce d'adaptation 32 peut être munie à sa périphérie une collerette 38 dont le diamètre intérieur correspond au diamètre extérieur de la première pièce d'adaptation 21 de sorte que celle-ci puisse venir s'encastrer dans la seconde pièce d'adaptation 32 avec un jeu. Un ergot d'indexation angulaire 39 est prévu en saillie de cette même collerette 38. L'ergot 39 est destiné à venir s'encastrer dans la 2^{nde} encoche 30 correspondante de la première pièce d'adaptation 21 lorsque l'opérateur installe les éléments à échanger 5 dans le magasin 1. La collerette 38 délimite une première chambre 40 où vient s'encastrer la partie haute de la première pièce d'adaptation 21 comme le montre la figure 9. Quatre dégagements 37 sont éventuellement prévus sur le fond de la chambre 40 permettant d'accueillir les bossages 17b. Une seconde chambre 41 plus étroite et plus profonde que la première 40, au besoin de forme conique dégage un espace pour guider la tige de traction 3a, 3b lors de son introduction dans un alésage axial 42 pratiqué au centre de la seconde pièce d'adaptation 32. Un jeu est prévu entre l'alésage 42 et la tige de traction 3a, 3b. La fonction de verrouillage de l'élément à échanger 5 dans son logement individuel 33, par l'intermédiaire de la tige de traction 3a, 3b, est assurée d'une manière conventionnelle par un système de billes et ressorts 43 qui coopèrent avec la gorge supérieure 14a, 14b de la tige de traction 3a, 3b. L'opération de verrouillage/déverrouillage est une simple opération mécanique qui s'effectue sans aucune commande à distance. Il est seulement nécessaire de calibrer soigneusement les ressorts de façon à réaliser un bon compromis entre un verrouillage solide de l'élément à échanger en position de stockage et la facilité d'introduction/extraction par le bras du changeur. Cette seconde pièce d'adaptation 32 ne nécessite pas des tolérances de fabrication sévères comme c'est le cas pour les portes-électrodes. Elle peut être fabriquée en matériau léger comme le plastique d'où un prix de revient modéré.

Il est bien entendu que les modes d'exécution et variantes décrits ci-dessus ne présentent aucun caractère limitatif et qu'ils peuvent recevoir toutes modifications désirables dans le cadre défini par la revendication indépendante.

En particulier, la première pièce d'adaptation 21 pourrait être agencée autour du porte-électrode 11a, 11b et ne pas être reliée à la tige de traction 3a, 3b.

Cette première pièce d'adaptation 21 pourrait également prendre place entre le porte-électrode 11a, 11b et l'électrode 22. Cela implique d'accepter un inconvénient non négligeable : celui de démonter chaque électrode de son porte-électrode pour introduire la première pièce d'adaptation.

Dans ces variantes moins favorables il faudra aussi accepter les effets provoqués notamment par un désalignement entre le système d'attachement de la machine et la pince du changeur, laquelle peut transmettre par l'intermédiaire du porte-électrode des efforts parasites susceptibles de perturber le fonctionnement des organes de positionnement tels que faces d'appui, picots, pièces élastiques, lors de l'introduction de l'élément à échanger 5 dans le système d'attachement de la machine EDM.

Le dispositif de gestion des électrodes pourrait présenter une construction différente de celle représentée sur les figures. Par exemple un second magasin à carrousel vertical pourrait être installé devant la machine et en contrebas du bac de travail 7 dans le but d'échanger des éléments exclusivement avec la table 45 de la machine alors qu'un premier magasin déservirait uniquement la tête 4 de la même machine. Dans ce cas, c'est le logement le plus haut du magasin qui devrait basculer de la position horizontale à la position verticale pour servir l'élément 5 à la pince 9. L'élément à échanger 5 étant dans ce cas saisi par la pince 9 avec sa tige de traction 3a, 3b pointant vers le bas. Un tel arrangement n'est évidemment pas idéal pour échanger des éléments d'un poids supérieur à une dizaine de kilos.

Dans un autre exemple un magasin à carrousel horizontal pourrait comporter plusieurs changeurs pour desservir plusieurs machines. Le râtelier ou magasin pourrait ne pas être équipé de la seconde pièce d'adaptation 32 ; c'est-à-dire que les éléments à échanger 5 y seraient suspendus par l'intermédiaire de leur tige de traction 3a, 3b, alors qu'une machine au moins serait munie d'un changeur rapide capable de saisir les éléments à échanger par l'intermédiaire de la première pièce d'adaptation 21.

La seconde pièce d'adaptation 32 pourrait être construite de manière différente ; par exemple ne pas comporter de collerette 38 à sa périphérie pour l'encastrement de la première pièce d'adaptation 21 ; cette dernière n'étant positionnée dans le râtelier que par sa tige de traction 3a, 3b et l'ergot 39.

### Numérotation des figures

- 1: magasin
- 2: changeur d'éléments
- 3a, 3b: tige de traction
- 4, 4a, 4b: tête d'usinage
- 5: élément à échanger
- 6: électrode pièce
- 7: bac de travail
- 8: socle du magasin
- 9: pince du changeur
- 10: axe de symétrie 1^{ère} pièce d'adaptation
- 11a, 11b: porte-électrode
- 12a, 12b: axes tige
- 13a, 13b: axes porte-électrode
- 14a, 14b: gorge circulaire
- 15a, 15b: faces d'appui rectifiées
- 16a, 16b: plaques ou pièces élastiques
- 17a, 17b: bossages
- 18a, 18b: encastrements dans plaques élastiques
- 19a, 19b: picots de forme pyramidale
- 20a, 20b: gorges dans tige de traction
- 21: 1^{ère} pièce d'adaptation
- 22: électrode-outil
- 23: orifices dans 1^{ère} pièce d'adaptation
- 24: alésage central dans 1^{ère} pièce d'adaptation
- 25: chanfrein autour 1^{ère} pièce d'adaptation
- 26: rainure autour 1^{ère} pièce d'adaptation
- 26a: nervure dans pince changeur 9
- 27: 1^{ère} encoche dans 1^{ère} pièce d'adaptation
- 27a: ergot dans pince changeur 9
- 28: doigt de verrouillage sur pince
- 29: évidement sur partie inf 1^{ère} pièce d'adaptation
- 30: 2^{nde} encoche dans 1^{ère} pièce d'adaptation
- 31: vis de blocage 1^{ère} pièce d'adaptation
- 32: 2^{nde} pièce d'adaptation
- 33: logements magasin
- 34: bras du logement magasin
- 35: axe du bras
- 37: dégagements pour accueillir les bossages 17b
- 38: collerette sur 2^{nde} pièce d'adaptation
- 39: ergot d'indexation sur 2^{nde} pièce d'adaptation
- 40: 1^{ère} chambre dans 2^{nde} pièce d'adaptation
- 41: 2^{nde} chambre dans 2^{nde} pièce d'adaptation
- 42: alésage axial dans 2^{nde} pièce d'adaptation
- 43: système de verrouillage dans 2^{nde} pièce d'adaptation
- 44: machine EDM
- 45: table de la machine

## Revendications

1. Dispositif de gestion des électrodes pour machines d'usinage par électroérosion utilisant des électrodes outils (22) destinées à usiner des électrodes pièces (6), le dispositif de gestion comportant au moins un magasin (1) présentant une série de logements individuels (33) agencés pour recevoir et maintenir des éléments à échanger (5) constitués par lesdites électrodes montées chacune sur un porte-électrode (11a, 11b) qui est agencé pour être aligné en position montée par rapport à la machine au moyen d'éléments saillants (17a,17b,19a, 19b) attachés soit au porte-électrode soit à la tête d'usinage de la machine et au moins un dispositif changeur (2) muni d'au moins un organe de préhension destiné à déplacer les éléments à échanger (5) desdits logements individuels (33) vers un système d'attachement situé sur la machine (44) et vice versa, **caractérisé par le fait que** le dispositif de gestion comprend au moins une première pièce d'adaptation (21) associée à chacun des éléments à échanger (5), ladite première pièce d'adaptation (21) étant fixée d'une manière rigide à la tige de traction (3a, 3b) attachée axialement au porte-électrode (11a, 11b) tout en présentant un jeu par rapport à toutes les parties du porte-électrodes et conformée de façon à entourer au moins partiellement le porte-électrode (11a, 11b) et à être enserrée au moins partiellement sur son pourtour par une pince (9) formant ledit organe de préhension de façon à garantir un maintien précis de l'élément à échanger (5) par la pince (9) et comportant une série d'orifices (23) permettant auxdits éléments saillants (17a, 17b, 19a 19b) de traverser la première pièce d'adaptation.

2. Dispositif de gestion selon la revendication 1, **caractérisé par le fait que** ledit porte-électrode (11a, 11b) est agencé de façon à supporter des électrodes (22, 6) faisant office d'outils ou de pièces à usiner, ledit porte-électrode étant muni d'une tige de traction (3a, 3b) reliée axialement audit porte-électrode et destinée à verrouiller l'élément à échanger (5) dans le système d'attachement de la machine, la tige de traction (3a, 3b) comportant à cet effet près de son extrémité libre au moins un élément de retenue (14a, 14b) destiné à coopérer avec un dispositif de verrouillage dudit système d'attachement, le porte-électrode étant muni sur une première face, d'une part de pièces élastiques (16a, 16b) qui coopèrent avec des éléments d'alignement avantageusement réalisés sous forme de picots (19a, 19b) prévus sur le système d'attachement et d'autre part de faces d'appui (15a, 15b) disposées autour de la tige de traction (3a, 3b) et constituant un plan de référence, lesdites faces d'appui coopérant avec des éléments d'appui correspondants prévus sur le système d'attachement de façon à assurer un positionnement exact du porte-électrode par rapport au système d'attachement.

3. Dispositif de gestion selon la revendication 1 ou 2, **caractérisé par le fait que** la première pièce d'adaptation (21) présente un encombrement latéral au moins aussi grand que celui du porte-électrode (11a, 11b).

4. Dispositif de gestion selon la revendication 2, **caractérisé par le fait que** la première pièce d'adaptation (21) est conformée de façon à s'imbriquer sur le porte-électrode (11a, 11b), des moyens de fixation (31) étant prévus pour assujettir la première pièce d'adaptation (21) à la tige de traction (3a, 3b) ou au porte-électrode (11a, 11b) .

5. Dispositif de gestion selon la revendication 4, **caractérisé par le fait que** la première pièce d'adaptation (21) est fixée d'une manière rigide à la tige de traction (3a, 3b) tout en présentant un jeu par rapport à toutes les parties du porte-électrode (11a, 11b), de sorte à permettre un désalignement entre les axes de la tige (12a, 12b) et du porte-électrode (13a, 13b), ledit désalignement étant réalisé favorablement sous forme d'une genouillère.

6. Dispositif de gestion selon la revendication 4 ou 5, **caractérisé par le fait que** la première pièce d'adaptation (21) comporte un alésage central (24) et des orifices (23) permettant à la tige de traction (3a, 3b) ainsi qu'à des bossages (17a, 17b) supportant les surfaces ou éléments d'appui (15a, 15b) et aux picots formant les éléments d'alignement (19a, 19b) de traverser complètement la pièce d'adaptation (21).

7. Dispositif de gestion selon la revendication 6, **caractérisé par le fait que** la première pièce d'adaptation (21) présente au voisinage desdits alésage et orifices (24, 23) une épaisseur qui n'excède pas la hauteur desdits bossages (17a, 17b) et éléments d'alignement (19a, 19b).

8. Dispositif de gestion selon la revendication 4, **caractérisé par le fait que** la première pièce d'adaptation (21) est munie en son centre d'un alésage (24) agencé de façon à recevoir la tige de traction (3a, 3b), l'axe central de cet alésage correspondant à l'axe de symétrie global (10) de ladite première pièce d'adaptation.

9. Dispositif de gestion selon au moins une des revendications 1 à 8, **caractérisé par le fait que** la première pièce d'adaptation (21) comporte au moins une rainure ou nervure périphérique (26) agencée de façon à coopérer avec une nervure (26a) ou rainure prévue sur la pince (9) pour bloquer tout mouvement de l'élément à échanger (5) par rapport à la pince durant sa manipulation.

10. Dispositif de gestion selon la revendication 4, **caractérisé par le fait que** la première pièce d'adaptation (21) comporte un évidement (29) destiné à recevoir le porte-électrode (11a, 11b) qui vient se loger dans ledit évidement.

11. Dispositif de gestion selon la revendication 1, **caractérisé par le fait que** la première pièce d'adaptation (21) comporte à sa périphérie au moins une encoche (27, 30) destinée à l'indexation angulaire de l'élément à échanger (5) par rapport à la pince (9, 27a) et/ou par rapport auxdits logements individuels (33) du magasin (1).

12. Dispositif de gestion selon la revendication 2, **caractérisé par le fait que** la tige de traction (3a, 3b), destinée à fixer l'élément à échanger (5) au système d'attachement de la machine (44) est incorporée à la première pièce d'adaptation (21) constituant une pièce monobloc.

13. Dispositif de gestion selon la revendication 1, **caractérisé par le fait qu'**il comporte une seconde pièce d'adaptation (32) associée et fixée à chacun des logements (33) individuels du magasin (1) susceptibles d'être utilisés, cette seconde pièce d'adaptation (31) comportant en son centre un alésage axial (42) agencé de façon à recevoir la tige de traction (3a, 3b) du porte-électrode (11a, 11b), chaque logement individuel (33) étant solidaire d'un bras (34) articulé à son extrémité libre au magasin (1) de façon à permettre le basculement du logement individuel (33) et de l'élément à échanger (5) d'une position horizontale vers une position verticale et inversement pour assurer un stockage horizontal des éléments à échanger (5) et leur prise par la pince (9) dans une position verticale.

14. Dispositif de gestion selon la revendication 13, **caractérisé par le fait qu'**il comprend des moyens d'indexation angulaire, favorablement sous forme d'ergot (39) et d'encoche (30), prévus entre la première et la seconde pièces d'adaptation (21, 32) et agencés de façon à assurer une position angulaire prédéterminée de l'élément à échanger (5) lorsqu'il est stocké dans le magasin (1).

15. Dispositif de gestion selon la revendication 13, **caractérisé par le fait que** la seconde pièce d'adaptation (32) comporte à sa périphérie une collerette (38) dont le diamètre intérieur correspond au diamètre extérieur de la première pièce d'adaptation (21) de sorte que cette première pièce d'adaptation s'encastre avec un jeu dans la seconde pièce d'adaptation.

16. Dispositif de gestion selon la revendication 15, **caractérisé par le fait que** la collerette (38) délimite dans la seconde pièce d'adaptation (32) une chambre (40) dans laquelle une partie de la première pièce d'adaptation (21) vient s'encastrer avec un jeu.

17. Dispositif de gestion selon les revendications 2 et 13, **caractérisé par le fait que** la seconde pièce d'adaptation (32) ou le logement individuel (33) est muni d'un second dispositif de verrouillage (43) destiné à coopérer avec la tige de traction (3a, 3b).

18. Dispositif de gestion selon la revendication 17, **caractérisé par le fait que** la seconde pièce d'adaptation (32) comporte une chambre (41) de forme conique située autour de l'alésage axial (42) de sorte à guider la tige de traction (3a, 3b) lors de son introduction dans ledit alésage.

19. Dispositif de gestion selon la revendication 13, **caractérisé par le fait que** la seconde pièce d'adaptation (32) et le logement individuel du magasin (33) auquel elle est associée constituent une pièce monobloc.

20. Dispositif de gestion selon la revendication 13, **caractérisé par le fait que** la seconde pièce d'adaptation (32) est fabriquée en un matériau léger, tel qu'une matière plastique.

21. Dispositif de gestion selon les revendications 1 ou 13 **caractérisé par le fait que** le magasin (1) est de forme générale circulaire tournant autour d'un axe horizontal.

## Patentansprüche

1. Vorrichtung zur Verwaltung der Elektroden für Maschinen zur Elektroerosionsbearbeitung, die Werkzeug-Elektroden (22) verwenden, die dazu bestimmt sind, Werkstück-Elektroden (6) zu bearbeiten, wobei die Verwaltungsvorrichtung mindestens ein Magazin (1), das eine Reihe von Einzelaufnahmen (33) hat, die eingerichtet sind, um auszutauschende Elemente (5) aufzunehmen und zu halten, die aus den Elektroden bestehen, die je auf einen Elektrodenträger (11a, 11b) montiert sind, der eingerichtet ist, um in montierter Stellung bezüglich der Maschine mittels vorstehender Elemente (17a, 17b, 19a, 19b) ausgerichtet zu werden, die entweder am Elektrodenträger oder am Bearbeitungskopf der Maschine befestigt sind, und mindestens eine Austauschvorrichtung (2) aufweist, die mit mindestens einem Greiforgan ausgestattet ist, das dazu bestimmt ist, die auszutauschenden Elemente (5) von den Einzelaufnahmen (33) zu einem Befestigungssystem zu verschieben, das sich auf der Maschine (44) befindet, und umgekehrt, **dadurch gekennzeichnet, dass** die Verwaltungsvorrichtung mindestens ein erstes Anpassungsbauteil (21) enthält, das jedem der auszutauschenden Elemente (5) zugeordnet ist, wobei das erste Anpassungsbauteil (21) steif an der Zugstange (3a, 3b) fixiert ist, die axial am Elektrodenträger (11a, 11b) befestigt ist, wobei es gleichzeitig ein Spiel bezüglich aller Teile des Elektrodenträgers aufweist und so gestaltet ist, dass es zumindest teilweise den Elektrodenträger (11a, 11b) umgibt und zumindest teilweise auf seinem Umfang von einer Klemme (9) eingeklemmt wird, die das Greiforgan bildet, um einen präzisen Halt des auszutauschenden Elements (5) durch die Klemme (9) zu gewährleisten, und eine Reihe von Öffnungen (23) aufweist, die es den vorstehenden Elementen (17a, 17b, 19a, 19b) ermöglichen, das erste Anpassungsbauteil zu durchqueren.

2. Verwaltungsvorrichtung nach Anspruch 1, **dadurch gekennzeichnet, dass** der Elektrodenträger (11a, 11b) eingerichtet ist, um Elektroden (22, 6) zu tragen, die als Werkzeuge oder als zu bearbeitende Bauteile dienen, wobei der Elektrodenträger mit einer Zugstange (3a, 3b) versehen ist, die axial mit dem Elektrodenträger verbunden und dazu bestimmt ist, das auszutauschende Element (5) im Befestigungssystem der Maschine zu verriegeln, wobei die Zugstange (3a, 3b) zu diesem Zweck nahe ihrem freien Ende mindestens ein Halteelement (14a, 14b) aufweist, das dazu bestimmt ist, mit einer Verriegelungsvorrichtung des Befestigungssystems zusammenzuwirken, wobei der Elektrodenträger auf einer ersten Seite einerseits mit elastischen Bauteilen (16a, 16b), die mit Ausrichtelementen zusammenwirken, die vorteilhafterweise in Form von auf dem Befestigungssystem vorgesehenen Vorsprüngen (19a, 19b) hergestellt sind, und andererseits mit Auflageseiten (15a, 15b) versehen ist, die um die Zugstange (3a, 3b) herum angeordnet sind und eine Bezugsebene bilden, wobei die Auflageseiten mit entsprechenden Auflageelementen zusammenwirken, die auf dem Befestigungssystem vorgesehen sind, um eine genaue Positionierung des Elektrodenträgers bezüglich des Befestigungssystems zu gewährleisten.

3. Verwaltungsvorrichtung nach Anspruch 1 oder 2, **dadurch gekennzeichnet, dass** das erste Anpassungsbauteil (21) eine seitliche Abmessung aufweist, die mindestens so groß ist wie diejenige des Elektrodenträgers (11a, 11b).

4. Verwaltungsvorrichtung nach Anspruch 2, **dadurch gekennzeichnet, dass** das erste Anpassungsbauteil (21) so gestaltet ist, dass es sich auf den Elektrodenträger (11a, 11b) aufschiebt, wobei Befestigungseinrichtungen (31) vorgesehen sind, um das erste Anpassungsbauteil (21) an der Zugstange (3a, 3b) oder am Elektrodenträger (11a, 11b) zu befestigen.

5. Verwaltungsvorrichtung nach Anspruch 4, **dadurch gekennzeichnet, dass** das erste Anpassungsbauteil (21) steif an der Zugstange (3a, 3b) fixiert ist und dabei ein Spiel bezüglich aller Teile des Elektrodenträgers (11a, 11b) aufweist, um einen Versatz zwischen den Achsen der Stange (12a, 12b) und des Elektrodenträgers (13a, 13b) zu ermöglichen, wobei der Versatz vorzugsweise in Form eines Kniegelenks hergestellt wird.

6. Verwaltungsvorrichtung nach Anspruch 4 oder 5, **dadurch gekennzeichnet, dass** das erste Anpassungsbauteil (21) eine zentrale Bohrung (24) und Öffnungen (23) aufweist, die es der Zugstange (3a, 3b) sowie Buckeln (17a, 17b), die die Auflageflächen oder -elemente (15a, 15b) tragen, und den die Ausrichtelemente (19a, 19b) bildenden Vorsprüngen zu erlauben, das Anpassungsbauteil (21) vollständig zu durchqueren.

7. Verwaltungsvorrichtung nach Anspruch 6, **dadurch gekennzeichnet, dass** das erste Anpassungsbauteil 10 (21) in der Nähe der Bohrung und der Öffnungen (24, 23) eine Dicke aufweist, die die Höhe der Buckel (17a, 17b) und Ausrichtelemente (19a, 19b) nicht überschreitet.

8. Verwaltungsvorrichtung nach Anspruch 4, **dadurch gekennzeichnet, dass** das erste Anpassungsbauteil (21) in seiner Mitte mit einer Bohrung (24) ausgestattet ist, die so eingerichtet ist, dass sie die Zugstange (3a, 3b) aufnimmt, wobei die Mittelachse dieser Bohrung der globalen Symmetrieachse (10) des ersten Anpassungsbauteils entspricht.

9. Verwaltungsvorrichtung nach mindestens einem der Ansprüche 1 bis 8, **dadurch gekennzeichnet, dass** das erste Anpassungsbauteil (21) mindestens eine Umfangsrille oder -rippe (26) aufweist, die so eingerichtet ist, dass sie mit einer Rippe (26a) oder Rille zusammenwirkt, die auf der Klemme (9) vorgesehen ist, um jede Bewegung des auszutauschenden Elements (5) bezüglich der Klemme während seiner Handhabung zu blockieren.

10. Verwaltungsvorrichtung nach Anspruch 4, **dadurch gekennzeichnet, dass** das erste Anpassungsbauteil (21) eine Aussparung (29) aufweist, die dazu bestimmt ist, den Elektrodenträger (11a, 11b) aufzunehmen, der in der Aussparung untergebracht wird.

11. Verwaltungsvorrichtung nach Anspruch 1, **dadurch gekennzeichnet, dass** das erste Anpassungsbauteil (21) am seinem Umfang mindestens eine Kerbe (27, 30) aufweist, die zur Winkelindexierung des auszutauschenden Elements (5) bezüglich der Klemme (9, 27a) und/oder bezüglich der Einzelaufnahmen (33) des Magazins (1) bestimmt ist.

12. Verwaltungsvorrichtung nach Anspruch 2, **dadurch gekennzeichnet, dass** die Zugstange (3a, 3b), die dazu bestimmt ist, das auszutauschende Element (5) am Befestigungssystem der Maschine (44) zu fixieren, in das erste Anpassungsbauteil (21) eingebaut ist, das ein einstückiges Bauteil bildet.

13. Verwaltungsvorrichtung nach Anspruch 1, **dadurch gekennzeichnet, dass** sie ein zweites Anpassungsbauteil (32) aufweist, das jeder der Einzelaufnahmen (33) des Magazins (1) zugeordnet und daran fixiert ist, die verwendet werden können, wobei dieses zweite Anpassungsbauteil (31) in seiner Mitte eine axiale Bohrung (42) aufweist, die so eingerichtet ist, dass sie die Zugstange (3a, 3b) des Elektrodenträgers (11a, 11b) aufnimmt, wobei jede Einzelaufnahme (33) fest mit einem Arm (34) verbunden ist, der an seinem freien Ende an das Magazin (1) angelenkt ist, um das Kippen der Einzelaufnahme (33) und des auszutauschenden Elements (5) von einer waagrechten Stellung in eine senkrechte Stellung und umgekehrt zu erlauben, um eine waagrechte Lagerung der auszutauschenden Elemente (5) und ihr Ergreifen durch die Klemme (9) in einer senkrechten Stellung zu gewährleisten.

14. Verwaltungsvorrichtung nach Anspruch 13, **dadurch gekennzeichnet, dass** sie Winkelindexierungseinrichtungen enthält, vorzugsweise in Form eines Zapfens (39) und einer Kerbe (30), die zwischen dem ersten und dem zweiten Anpassungsbauteil (21, 32) vorgesehen und eingerichtet sind, eine vorbestimmte Winkelstellung des auszutauschenden Elements (5) zu gewährleisten, wenn es im Magazin (1) gelagert ist.

15. Verwaltungsvorrichtung nach Anspruch 13, **dadurch gekennzeichnet, dass** das zweite Anpassungsbauteil (32) an seinem Umfang einen Kragen (38) aufweist, dessen Innendurchmesser dem Außendurchmesser des ersten Anpassungsbauteils (21) entspricht, so dass dieses erste Anpassungsbauteil sich mit einem Spiel in das zweite Anpassungsbauteil einpasst.

16. Verwaltungsvorrichtung nach Anspruch 15, **dadurch gekennzeichnet, dass** der Kragen (38) im zweiten Anpassungsbauteil (32) eine Kammer (40) begrenzt, in die sich ein Teil des ersten Anpassungsbauteils (21) mit einem Spiel einpasst.

17. Verwaltungsvorrichtung nach den Ansprüchen 2 und 13, **dadurch gekennzeichnet, dass** das zweite Anpassungsbauteil (32) oder die Einzelaufnahme (33) mit einer zweiten Verriegelungsvorrichtung (43) versehen ist, die dazu bestimmt ist, mit der Zugstange (3a, 3b) zusammenzuwirken.

18. Verwaltungsvorrichtung nach Anspruch 17, **dadurch gekennzeichnet, dass** das zweite Anpassungsbauteil (32) eine kegelförmige Kammer (41) aufweist, die sich um die axiale Bohrung (42) herum befindet, um die Zugstange (3a, 3b) bei ihrer Einführung in die Bohrung zu führen.

19. Verwaltungsvorrichtung nach Anspruch 13, **dadurch gekennzeichnet, dass** das zweite Anpassungsbauteil (32) und die Einzelaufnahme des Magazins (33), der es zugeordnet ist, ein einstückiges Bauteil bilden.

20. Verwaltungsvorrichtung nach Anspruch 13, **dadurch gekennzeichnet, dass** das zweite Anpassungsbauteil (32) aus einem leichten Material hergestellt ist, zum Beispiel einem Kunststoff.

21. Verwaltungsvorrichtung nach den Ansprüchen 1 oder 13, **dadurch gekennzeichnet, dass** das Magazin (1) allgemein kreisförmig ist und um eine waagrechte Achse dreht.

## Claims

1. Device for managing the electrodes for electrical discharge machining machine tools using tool electrodes (22) intended to machine workpiece electrodes (6), the management device comprising at least one magazine (1) that has a series of individual housings (33) designed to accept and hold exchangeable elements (5) consisting of the said electrodes each mounted on an electrode holder (11a, 11b), which is designed to be aligned in the mounted position with respect to the machine by means of protruding elements (17a, 17b, 19a, 19b) attached either to the electrode holder or to the machining head of the machine and at least one changer device (2) equipped with at least one gripping member intended to move the exchangeable elements (5) from the said individual housings (33) towards an attachment system situated on the machine (44) and vice versa, **characterized in that** the management device comprises at least one first adapter piece (21) associated with each of the exchangeable elements (5), the said first adapter piece (21) being fixed rigidly to the drawbar (3a, 3b) axially attached to the electrode holder (11a, 11b) while at the same time exhibiting a clearance with respect to all the parts of the electrode holder and being shaped so that it at least partially surrounds the electrode holder (11a, 11b) and so that it can be gripped at least partially around its periphery by a gripper (9) that forms the said gripping member so as to ensure that the exchangeable element (5) is held precisely by the gripper (9) and comprising a series of orifices (23) allowing the said protruding elements (17a, 17b, 19a, 19b) to pass through the first adapter piece.

2. Management device according to Claim 1, **characterized in that** the said electrode holder (11a, 11b) is designed to support electrodes (22, 6) acting as tools or as workpieces, the said electrode holder being fitted with a drawbar (3a, 3b) connected axially to the said electrode holder and intended to lock the exchangeable element (5) in the attachment system of the machine, the drawbar (3a, 3b) for this purpose comprising, near its free end, at least one retaining element (14a, 14b) intended to collaborate with a locking device of the said attachment system, the electrode holder being fitted on a first face, firstly with elastic pieces (16a, 16b) which collaborate with alignment elements advantageously produced in the form of pins (19a, 19b) provided on the attachment system and secondly with bearing faces (15a, 15b) arranged around the drawbar (3a, 3b) and constituting a plane of reference, the said bearing faces collaborating with corresponding bearing elements provided on the attachment system so as to ensure exact positioning of the electrode holder with respect to the attachment system.

3. Management device according to Claim 1 or 2, **characterized in that** the first adapter piece (21) has a lateral size at least as great as that of the electrode holder (11a, 11b).

4. Management device according to Claim 2, **characterized in that** the first adapter piece (21) is shaped so that it can be imbricated on the electrode holder (11a, 11b), fixing means (31) being provided to secure the first adapter piece (21) to the drawbar (3a, 3b) or to the electrode holder (11a, 11b).

5. Management device according to Claim 4, **characterized in that** the first adapter piece (21) is fixed rigidly to the drawbar (3a, 3b) while at the same time exhibiting a clearance with respect to all the parts of the electrode holder (11a, 11b) so as to allow a misalignment between the axes of the bar (12a, 12b) and of the electrode holder (13a, 13b), the said misalignment preferably being achieved in the form of a toggle joint.

6. Management device according to Claim 4 or 5, **characterized in that** the first adapter piece (21) comprises a central bore (24) and orifices (23) which allow the drawbar (3a, 3b), and bosses (17a, 17b) supporting the bearing surfaces or elements (15a, 15b), and the pins that form the alignment elements (19a, 19b), to pass fully through the adapter piece (21).

7. Management device according to Claim 6, **characterized in that** the first adapter piece (21) has, near the said bore and the said orifices (24, 23), a thickness that does not exceed the height of the said bosses (17a, 17b) and alignment elements (19a, 19b).

8. Management device according to Claim 4, **characterized in that** the first adapter piece (21) is equipped at its centre with a bore (24) designed to accept the drawbar (3a, 3b), the central axis of this bore corresponding to the overall axis of symmetry (10) of the said first adapter piece.

9. Management device according to at least one of Claims 1 to 8, **characterized in that** the first adapter piece (21) comprises at least one peripheral groove or rib (26) designed to collaborate with a rib (26a) or groove provided on the gripper (9) in order to block any movement of the exchangeable element (5) with respect to the gripper while it is being manipulated.

10. Management device according to Claim 4, **characterized in that** the first adapter piece (21) comprises a recess (29) intended to accept the electrode holder (11a, 11b) which becomes housed in the said recess.

11. Management device according to Claim 1, **characterized in that** the first adapter piece (21) comprises at its periphery at least one notch (27, 30) intended to angularly index the exchangeable element (5) with respect to the gripper (9, 27a) and/or with respect to the said individual housings (33) of the magazine (1).

12. Management device according to Claim 2, **characterized in that** the drawbar (3a, 3b), intended to fix the exchangeable element (5) to the attachment system of the machine (44), is incorporated into the first adapter piece (21) to constitute a one-piece component.

13. Management device according to Claim 1, **characterized in that** it comprises a second adapter piece (32) associated with and fixed to each of the individual housings (33) of the magazine (1) that are likely to be used, this second adapter piece (31) comprising at its centre an axial bore (42) designed to accept the drawbar (3a, 3b) of the electrode holder (11a, 11b), each individual housing (33) being secured to an arm (34) articulated at its free end to the magazine (1) so as to allow the individual housing (33) and the exchangeable element (5) to be tilted from a horizontal position into a vertical position and vice versa, so that the exchangeable elements (5) can be stored horizontally and picked up by the gripper (9) in a vertical position.

14. Management device according to Claim 13, **characterized in that** it comprises angular indexing means, preferably in the form of a peg (39) and a notch (30), which are provided between the first and the second adapter pieces (21, 32) and designed to ensure a predetermined angular position of the exchangeable element (5) when it is stored in the magazine (1).

15. Management device according to Claim 13, **characterized in that** the second adapter piece (32) comprises at its periphery a collar (38) the inside diameter of which corresponds to the outside diameter of the first adapter piece (21) so that this first adapter piece can be set with clearance into the second adapter piece.

16. Management device according to Claim 15, **characterized in that** the collar (38) delimits in the second adapter piece (32) a chamber (40) into which part of the first adapter piece (21) can be set, with clearance.

17. Management device according to Claims 2 and 13, **characterized in that** the second adapter piece (32) or the individual housing (33) is equipped with a second locking device (43) intended to collaborate with the drawbar (3a, 3b).

18. Management device according to Claim 17, **characterized in that** the second adapter piece (32) comprises a chamber (41) of conical shape situated around the axial bore (42) so as to guide the drawbar (3a, 3b) as it is introduced into the said bore.

19. Management device according to Claim 13, **characterized in that** the second adapter piece (32) and the individual housing of the magazine (33) with which it is associated constitute a one-piece component.

20. Management device according to Claim 13, **characterized in that** the second adapter piece (32) is made of a light material, such as a plastic.

21. Management device according to Claim 1 or 13, **characterized in that** the magazine (1) is of circular overall shape revolving about a horizontal axis.
